(19) Europäisches Patentamt
European Patent Office
Office européen des brevets

(11) EP 1 655 872 A1

(12) EUROPEAN PATENT APPLICATION

(43) Date of publication:
10.05.2006 Bulletin 2006/19

(51) Int Cl.:
*H04L 1/00* (2006.01) *H04L 27/00* (2006.01)

(21) Application number: 05256771.6

(22) Date of filing: 02.11.2005

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 05.11.2004 JP 2004322616

(71) Applicant: NTT DoCoMo, Inc.
Tokyo 100-6150 (JP)

(72) Inventors:
- Asai, Takahiro, NTT DoCoMo Inc.
Chiyoda-ku
Tokyo 100-6150 (JP)
- Abe, Tetsushi, NTT DoCoMo Inc.
Chiyoda-ku
Tokyo 100-6150 (JP)
- Yoshino, Hitoshi, NTT DoCoMo Inc.
Chiyoda-ku
Tokyo 100-6150 (JP)

(74) Representative: Maury, Richard Philip
Marks & Clerk
90 Long Acre
London WC2E 9RA (GB)

# (54) Mobile communication receiver and transmitter for multiple wireless schemes

(57) A receiver for mobile communication includes a wireless scheme parameter storing unit (23) configured to store a plurality of characteristics of multiple wireless schemes, a wireless scheme estimation unit (22) configured to estimate one of the characteristics of a currently used wireless scheme from a received signal and select one of the wireless schemes corresponding to the estimated characteristic from the wireless scheme parameter storing unit, and a demodulator (24) configured to demodulate the received signal based on the selected wireless scheme.
A corresponding transmitter is capable of changing wireless parameters in an adaptive manner according to a propagation environment and required conditions such as quality of service.

FIG.1

101
TRANSMITTER
WIRELESS
SCHEME
A or B or ...
1
21
RECEIVER
2
24
DEMODULATOR
OUTPUT
22
WIRELESS
SCHEME
ESTIMATION
UNIT
WIRELESS SCHEME A
WIRELESS SCHEME B
WIRELESS SCHEME C
23
WIRELESS SCHEME PARAMETER STORING UNIT

EP 1 655 872 A1

## Description

### FIELD OF THE INVENTION

The present invention generally relates to a mobile communication technique, including mobile communication receivers and transmitters, and more particularly to a technique for efficiently and adaptively changing parameters of wireless schemes in accordance with the radio environment and required conditions including quality of services.

### BACKGROUND OF THE INVENITON

Conventionally, wireless parameters, including a transmission scheme (e.g., time division multiple access (TDMA) or code division multiple access (CDMA)), a carrier frequency band, and a signal bandwidth, are defined system by system, such as a parameter set for a personal digital cellular (PDC) telecommunication system or a parameter set for a wireless LAN. Transmitters and receivers perform wireless communications based on the wireless parameters fixed in an inflexible manner. Accordingly, a user with PDC equipment, for instance, cannot communicate with other PDC equipment unless an available channel exists in the PDC telecommunication system even if there is an available channel in other types of wireless communication systems (such as a wireless LAN).

To overcome this inconvenience, a cellular terminal that can switch the communication mode between the PDC mode and the PHS (personal handyphone system) mode was developed and put into practical use. In this case, a circuit that can deal with multiple mobile communication systems is installed in a transmitter and a receiver. With this technique, however, when starting communication with other wireless equipment, the currently applied mobile communication system has to be informed at the receiver using a control signal, and accordingly, the transmission efficiency is inevitably degraded.

Meanwhile, the wireless LAN scheme uses a 2.4 GHz ISM (industry science medical) band that does not require a license. Since multiple systems and users share the same frequency band, collision avoidance techniques are required. For this reason, the wireless LAN employs an access control scheme named carrier sense multiple access with collision avoidance (CSMA/CA). In order to improve the frequency utilization efficiency as a whole, the receiver is furnished with an interference canceling function so as to accept a certain degree of collision (interference).

There are two types of interference cancellation depending on whether wireless parameters of interference signals are used. It is known in general that the method using wireless parameters of the interference signal is superior in interference canceling characteristics. The wireless parameters of the interference signals are communicated to the receiver using control signals in order to allow the receiver to recognize these parameters. However, it appears to be difficult to share the control signals among different users or different systems sharing the same frequency band. Accordingly, it is not a practical idea to apply control signals to allow the receiver to distinguish between multiple wireless schemes used by different users.

Several methods for estimating the current wireless schemes without using control signals (i.e., blind estimation techniques) have been proposed to identify analog modulated signals, such as amplitude modulation (AM) signals or frequency modulation (FM) signals, as well as digitally modulated signals, such as binary phase shift keying (BPSK) modulation signals or quadrature phase shift keying (QPSK) modulation signals. See, for example, W. Gardner, "Spectral Correlation of Modulated Signals: Part I--Analog Modulation", IEEE Transactions on Communication, Volume 35, No. 6, pp. 584-594, June 1987 (Publication 1); and W. Gardner, W. Brown, and C. Chen, "Spectral Correlation of Modulated Signals: Part II--Digital Modulation", IEEE Transactions on Communication, Volume 35, No. 6, pp. 595-601, June 1987 (Publication 2).

However, in reality, various types of wireless schemes exist because of sophistication and diversification of mobile communication technologies, and it is very difficult to accurately estimate the wireless scheme from all the existing schemes.

To sum up, it is difficult for a conventional mobile communication system to efficiently and adaptively switch the parameters between different wireless schemes without using control signals, following the change in radio environment and/or the requested conditions because the wireless parameters are defined in a fixed manner for each of the systems. In addition, for conventional blind estimation methods used to switch the parameters between different communication schemes, it is difficult to estimate the currently used transmission schemes at high precision.

### SUMMARY OF THE INVENTION

The present invention was conceived to overcome the above-described problems in the prior art, and aims to provide a signal transmission and receiving technique in mobile communication that allows wireless schemes to be switched efficiently at a transmission according to the wireless environment between a transmitter and a receiver and required conditions, ,and to be estimated correctly at a receiving end.

In one aspect of the invention, a receiver for mobile communication is provided. The receiver comprises:

(a) a wireless scheme parameter storing unit configured to store characteristics of multiple wireless schemes;
(b) a wireless scheme estimation unit configured to estimate a characteristic of a currently used wireless scheme from a received signal and select a wireless scheme corresponding to the estimated characteristic from the wireless scheme parameter storing unit; and
(c) a demodulator configured to demodulate the received signal based on the selected wireless scheme.

This arrangement allows the receiver to identify the wireless schemes used by the transmitter without using a control signal, and can prevent the transmission efficiency from falling due to utilization of control signals. It is unnecessary for the receiver to estimate parameters for all possible combinations of wireless parameters because the receiver stores those parameters of the wireless scheme likely to be used by the transmitter. Consequently, the wireless schemes can be estimated accurately.
The receiver may further comprise an error detector configured to detect an error contained in the demodulation result. If the error is detected in the demodulation result, the wireless scheme estimation unit selects another wireless scheme from the wireless scheme parameter storing unit, and the demodulator performs demodulation on the received signal based on the newly selected wireless scheme. Accordingly, error in selection of wireless schemes can be reduced.
The receiver may further comprise an interference signal wireless scheme estimation unit configured to estimates a wireless scheme of an interference signal from the wireless schemes stored in the wireless scheme parameter storing unit, and an interference canceller configured to remove an interference signal component from the received signal based on the estimated wireless scheme of the interference signal. This arrangement allows the receiver to remove the interference signal from the received signal without using a control signal representing interference signal information, and the quality of the received signal can be improved.
For example, the wireless scheme estimation unit estimates a center carrier frequency, a signal bandwidth, a multiplexing mode, a transmission scheme, a multi-antenna transmission mode, a modulation scheme, and a channel coding rate in a hierarchical manner. This allows efficient estimation of wireless schemes.
In another aspect of the invention, a transmitter with one or more antennas used for mobile communication and capable of changing wireless parameters in an adaptive manner according to propagation environment and required conditions is provided. The transmitter comprises:

(a) a carrier frequency selecting unit configured to select a center carrier frequency from one or more unused or less-interfered with frequency bands;
(b) a signal bandwidth selecting unit configured to select a signal bandwidth according to at least one of a required transmission rate, QoS, interference condition, and other factors;
(c) a multiplexing mode selecting unit configured to select a multiplexing mode according to the selected signal bandwidth, the interference condition, and other factors;
(d) a multi-antenna transmission mode selecting unit configured to select a multi-antenna transmission mode according to at least one of the number of the antennas of the transmitter, the number of antennas of a receiver, channel correlation, SINR, and other factors; and
(e) a modulation scheme/channel coding rate selecting unit configured to select a modulation scheme and a channel coding rate according to the SINR.

This transmitter can select a set of wireless parameters according to the wireless environment, and efficient frequency utilization can be realized.
In still another aspect of the invention, a signal receiving method in mobile communication is provided. The signal transmission method comprises the steps of:

(a) calculating likelihood of multiple parameters for each of multiple wireless schemes stored in advance; and
(b) selecting a most likely parameter that is most likely to be used from the multiple parameters for each of the wireless schemes in a hierarchical manner.

With this method, currently used wireless parameters can be estimated accurately at a receiving end, in view of affinity in parameter selection at the transmission end.
In yet another aspect of the invention, a signal transmission method in mobile communication is provided. The signal transmission method comprises the step of selecting wireless parameters required to transmit a signal in a hierarchical manner, the wireless parameters including a transmission carrier frequency, a signal bandwidth, a multiplexing mode, a transmission scheme, a multi-antenna transmission mode, a modulation scheme and a channel coding.
This method can determine a set of wireless parameters more efficiently as compared with a conventional method for selecting wireless parameters from all possible combinations.

In a preferred example, the preferential order for selecting the wireless parameters in the hierarchical manner is adjusted according to propagation environment and interference condition. With this arrangement, wireless parameters can be selected efficiently consistent with the wireless environment and required conditions.

Alternatively, the preferential order for selecting the wireless parameters in the hierarchical manner is adjusted according to a wireless scheme of an interference signal. This arrangement can improve the interference canceling characteristic of the receiver.

With the above-described techniques, the wireless transmission parameters can be switched efficiently according to the environment at the transmission end, and the currently selected wireless schemes can be estimated and the received signal can be demodulated accurately at the receiving end.

## BRIEF DESCRIPTION OF THE DRAWINGS

Other features and advantages of the invention will become more apparent from the following detailed description when read in conjunction with the accompanying drawings, in which

FIG. 1 is a schematic diagram illustrating the structures of a transmitter and a receiver according to the first embodiment of the invention;
FIG. 2 is a schematic diagram illustrating the structures of a transmitter and a receiver according to the second embodiment of the invention;
FIG. 3 is a schematic diagram illustrating the structures of a transmitter and a receiver according to the third embodiment of the invention;
FIG. 4 is a diagram illustrating an example of hierarchical wireless parameter determination performed by the transmitter according to the fourth embodiment of the invention;
FIG. 5 is a diagram illustrating an example of hierarchical wireless parameter determination performed by the transmitter according to the fifth embodiment of the invention;
FIG. 6 is a diagram illustrating an example of hierarchical wireless parameter determination performed by the transmitter according to the sixth embodiment of the invention;
FIG. 7 is a schematic block diagram illustrating the structure of a transmitter according to the seventh embodiment of the invention;
FIG. 8 is a schematic diagram illustrating a wireless parameter estimation process performed by a receiver according to the eighth embodiment of the invention;
FIG. 9 is a diagram illustrating a three-dimensionally plotted cyclic autocorrelation function of an OFDM signal;
FIG. 10 is a diagram illustrating a three-dimensionally plotted cyclic autocorrelation function of a CDMA signal;
FIG. 11 is a graph illustrating detection probability of an OFDM signal as a function of SNR;
FIG. 12 is a diagram illustrating a three-dimensionally plotted cyclic autocorrelation function of a BPSK modulated signal; and
FIG. 13 is a diagram illustrating a three-dimensionally plotted cyclic autocorrelation function of a QPSK modulated signal.

## DETAILED DESCRIPTION OF THE PREFERRED EMBODIMENT

The present invention is described in detail below in conjunction with the attached drawings.

<First Embodiment>

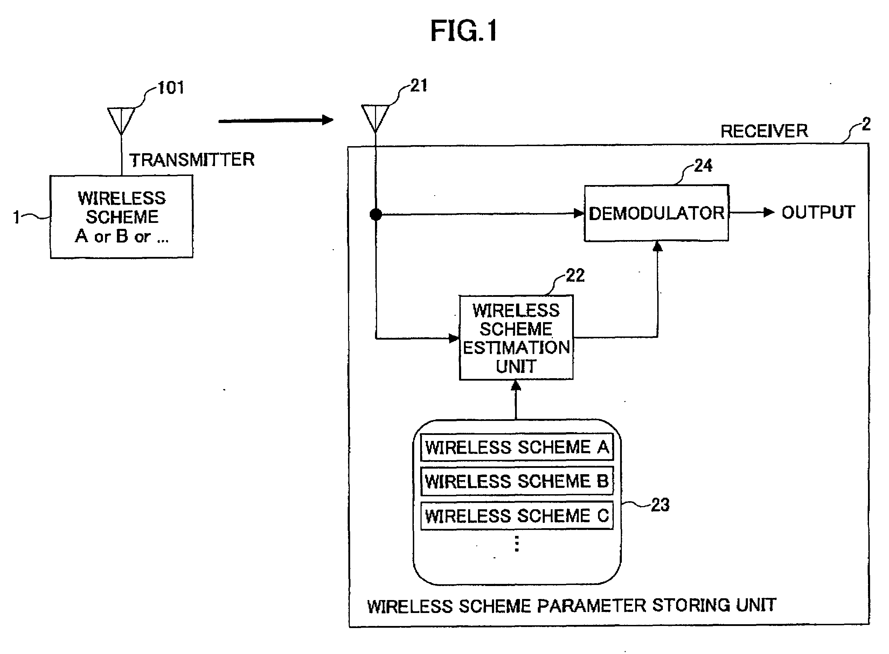

Fig.1 is a schematic diagram illustrating examples of a transmitter 1 and a receiver 2 according to the first embodiment of the invention. The transmitter 1 has an antenna 101, and it selects an appropriate wireless scheme from multiple wireless schemes (A, B, and some more) to transmit a signal. The receiver 2 has an antenna 21, a wireless scheme estimation unit 22 for estimating the wireless scheme based on the signal received at the antenna 21, a wireless scheme parameter storing unit 23 for storing wireless parameters for each of the wireless schemes (A, B, ...), and a demodulator 24 for demodulating the received signal based on the estimated wireless scheme.

The transmitter 1 changes the wireless schemes according to the currently required transmission rate, quality of services (QoS) including channel quality, and the propagation environment. The parameters defining the wireless schemes includes:

(1) center carrier frequency;
(2) signal bandwidth;

(3) multiplexing mode such as time division duplexing (TDD) or frequency division duplexing (FDD);
(4) transmission scheme such as single carrier TDMA, OFDM, or CDMA;
(5) multi-antenna transmission/receiving scheme such as beam forming (BF) using a directive radiation pattern, space time coding (STC), eigenmode-spatial division multiplexing (E-SDM), or spatial division multiplexing (SDM);
(6) modulation scheme such as BPSK or QPSK; and
(7) channel coding rate. When a CDMA transmission scheme is employed, the spreading factor is also changed. When an OFDM transmission scheme is employed, the number of sub-carriers and the guard interval are also changed.

Since the transmitter 1 adjusts the wireless schemes to be used according to the currently required transmission rate, QoS and the propagation environment, wireless communication can be performed efficiently from the viewpoint of frequency utilization.

At the receiver 2, the wireless scheme estimation unit 22 estimates the wireless parameters from the received signal. The demodulator 24 demodulates the received signal using the estimated wireless parameters. The receiver 2 stores those parameters likely to be selected by the transmitter 1 for each of the wireless schemes in the wireless scheme parameter storing unit 23. The wireless scheme estimation unit 22 selects the most likely wireless parameters from the wireless scheme parameter storing unit 23 for each of the wireless schemes. The demodulator 24 demodulates the received signal based on the selected parameters of the wireless schemes.

If the conventional wireless scheme estimation method disclosed in the above-described publications 1 or 2 is employed, in place of the arrangement of the first embodiment using the wireless scheme parameter storing unit 23, the estimation has to be carried out for all the possible combinations of parameters of the existing wireless schemes, which makes it difficult to achieve accurate estimation of the currently used wireless schemes. In contrast, in the first embodiment, those parameters likely to be used by the transmitter 1 are stored in the receiver 2 for each wireless scheme, and the receiver 2 selects the most likely ones from the stored parameters when estimating the current wireless schemes. Selecting the most appropriate parameters from the limited number of parameters for each wireless scheme can improve the estimation accuracy, as compared with the conventional method for covering all the possible parameters of the existing wireless schemes.

For instance, the transmitter 1 changes the center carrier frequency (also referred to simply as "carrier frequency") to another carrier frequency when interference from other transmitters increases. Regarding the fading fluctuation posing a severe problem to mobile communications, the carrier frequency is changed to a lower one if the fading fluctuation rate becomes large. The fading fluctuation rate is expressed using the maximum Doppler frequency fp, which is defined by $v/\lambda$ (where v denotes the moving speed and $\lambda$ denotes the wavelength). By decreasing the carrier frequency, the wavelength $\lambda$ increases, and the maximum Doppler frequency $f_D$ becomes smaller. As a result, the characteristic degradation caused by fading fluctuation can be reduced.

The signal bandwidth can be determined from the required transmission rate communicated to the transmitter from an upper layer. If severe interference occurs due to signals from other transmitters, the signal bandwidth is regulated so as to prevent the interference, or so as to accept a certain degree of interference within an allowed range for not causing serious problems.

Concerning TDD/FDD switching, if sufficient signal bandwidth is guaranteed in both directions between the transmitter and the receiver in bi-directional communication under the environment with interference from other wireless transmitters, FDD is selected. If the necessary signal bandwidths cannot be guaranteed, then TDD using the same signal band in both directions is selected. When applying TDD, a time duration called guard time has to be inserted between bi-directional communications in order to avoid collision. The insertion of the guard time leads to degradation of the transmission efficiency. Especially when the distance between the transmitter and the receiver is long, a long guard time has to be inserted. Accordingly, TDD/FDD mode switching is performed based on the maximum transmitter-to-receiver distance determined by the cell design, while taking into account the degradation of the transmission efficiency caused by selecting the TDD mode.

Concerning switching of the transmission scheme among, for example, single carrier TDMA, OFDM and CDMA, if influence of interference from other transmitters is large, then CDMA is selected because of the superiority in anti-interference characteristic. If influence of multipath fading is large in spite of less interference, then OFDM superior in anti-multipath fading characteristic is selected. If the available signal bandwidth is narrow, or if influence of multipath fading and/or interference is small, then single carrier TDMA is selected because this transmission scheme allows demodulation with less arithmetic operations.

Concerning switching of multi-antenna transmission/receiving mode among, for example, BF, STC, E-SDM, and SDM, if correlations between transmission antennas and between receiving antennas are high, and if the received signal power level is insufficient, then BF is selected in order to increase the receiving power level using a directive radiation pattern. If the transmission-antenna correlation and the receiving-antenna correlation are low, then STC that can improve the signal quality by the diversity effect is selected. If it is required to increase both the receiving power level and the transmission rate, then E-SDM is selected because this technique can increase the receiving power level by eigenbeam directive transmission, while achieving high transmission rate by parallel data transmission. If it is required to further improve the transmission rate although a sufficient receiving power level is achieved, then SDM performing parallel data transmission is selected.

In switching of the modulation scheme between, for example, PBSK and QPSK, the appropriate modulation scheme is selected according to the signal to interference plus noise power ratio (SINR) of the received signal at the receiver 2 such that the signal is demodulated so as to satisfy a prescribed signal quality. Similarly, the channel coding rate may be changed at the transmitter 1 according to the SINR of the received signal such that the signal is demodulated so as to achieve a prescribed signal quality.

If CDMA is selected, the spreading factor may be changed according to the interference condition. If influence of interference is large, the spreading factor is increased. If OFDM is selected, the guard interval and the number of sub-carriers are increased when the delay spread in multipath fading is large.

In this manner, wireless parameters of the wireless schemes are adjusted according to the required transmission rate, QoS, and the environment by estimating the appropriate ones from the wireless scheme parameter storing unit. Accordingly, wireless communication with high frequency utilization efficiency is realized.

<Second Embodiment>

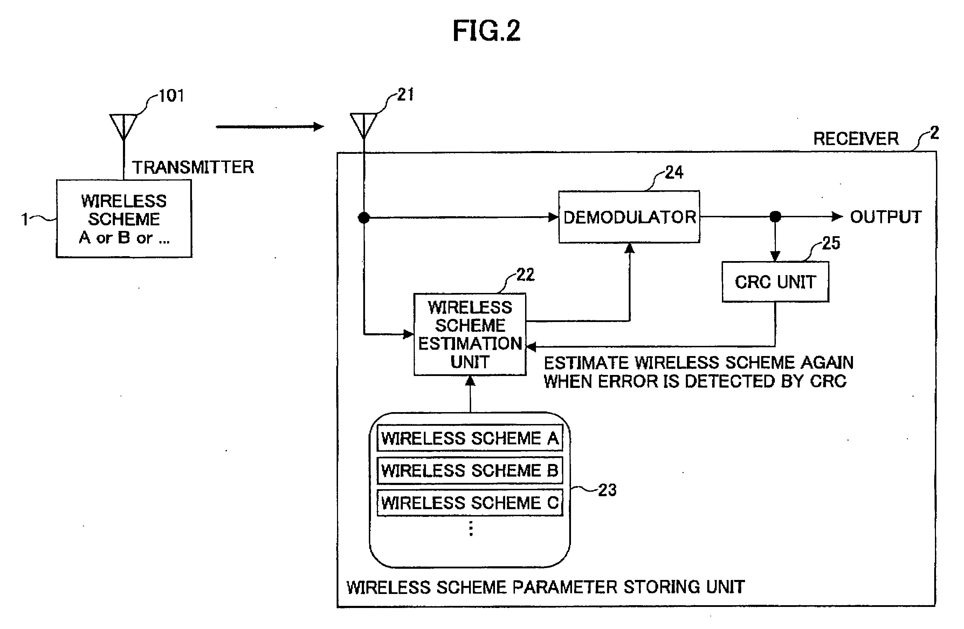

FIG. 2 is a schematic diagram illustrating a transmitter 1 and a receiver 2 according to the second embodiment of the invention. In this embodiment, a CRC unit 25 is added to the receiver 2 to detect an error in demodulation result by cyclic redundancy check.

Similar to the first embodiment, the wireless scheme estimation unit 22 of the receiver 2 estimates the currently used parameters of the wireless schemes by selecting the parameters most likely to be used by the transmitter 1 for the respective wireless schemes from the wireless scheme parameter storing unit 23. The demodulator 24 demodulates the received data based on the selected wireless schemes. Then, the CRC unit 25 checks whether the demodulated data contain any error. If an error is detected, the wireless scheme estimation unit 22 estimates a set of wireless schemes again. To be more precise, the second most likely wireless parameter set, other than the previously selected one, is selected from the wireless scheme parameter storing unit 23. The demodulator 24 performs demodulation again on the received data using the newly selected wireless schemes. By repeating these operations, adverse influence of estimation error that may occur in the wireless scheme estimation unit 22 can be reduced.

<Third Embodiment>

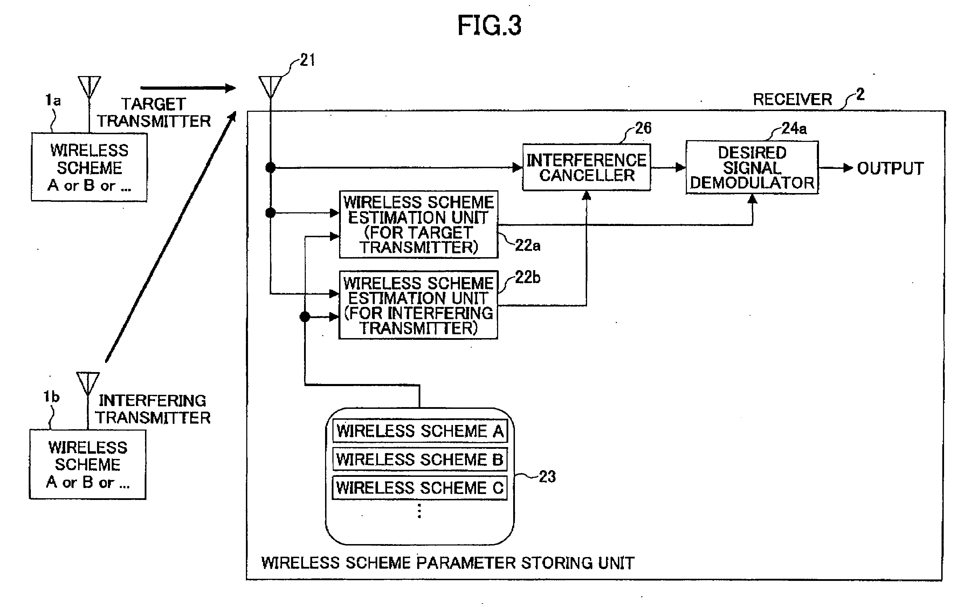

FIG. 3 is a schematic diagram illustrating transmitters 1 and a receiver 2 according to the third embodiment of the invention. In the third embodiment, a second wireless scheme estimation unit (an interference signal wireless scheme estimation unit) 22b is added to the structure shown in FIG. 1 to estimate the wireless transmission scheme of an interfering transmitter 1b. An interference canceller 26 is also added to cancel the interference signal from the received signal. The first wireless scheme estimation unit 22a that estimates the wireless schemes currently used by the target transmitter 1a corresponds to the wireless scheme estimation unit 22 shown in FIG. 1, and the desired signal demodulator 24a corresponds to the demodulator 24 shown in FIG. 1.

In operation, the first wireless scheme estimation unit 22a estimates the wireless schemes selected by the target transmitter 1a based on the received signal. The second wireless scheme estimation unit 22b estimates the wireless schemes of the other transmitter 1b whose transmission signal becomes an interference signal for the desired signal from the target transmitter 1a. The interference canceller 26 removes the interference component from the received signal using the estimated wireless schemes of the interfering transmitter 1b. The desired signal demodulator 24a demodulates the desired signal based on the interference-cancelled signal and the estimated wireless schemes of the target transmitter 1a.

In the example shown in FIG. 3, only one interfering transmitter 1b is depicted and the receiver 2 has a structure dealing with the interference signal from the single interfering transmitter 1b; however, the configuration of the third embodiment can be applied to the environment where two or more interfering transmitters exist. In this case, the receiver 2 has multiple second wireless scheme estimation units 22b and multiple interference cancellers 26 to cancel all the interference signals from the received signal. Then, the desired signal is demodulated without suffering from influence of interference from other transmitters.

<Fourth Embodiment>

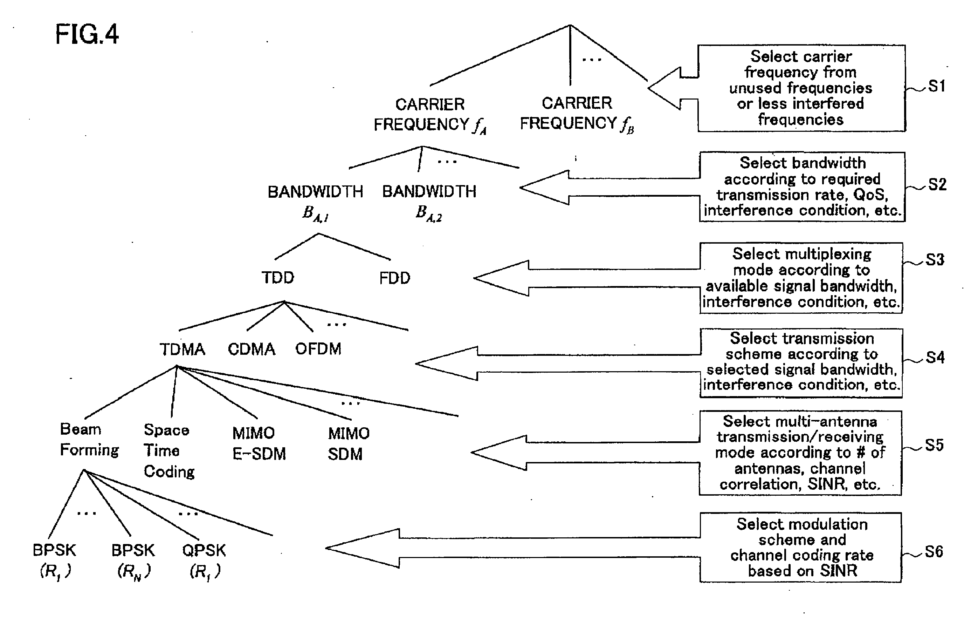

FIG. 4 is a schematic diagram illustrating an example of hierarchical wireless parameter determination performed by a transmitter according to the fourth embodiment of the invention.

In the fourth embodiment, the transmitter 1 determines a combination of wireless parameters in a hierarchical manner according to priority order (or preferential order). This method allows the transmitter 1 to determine a set of wireless parameters more efficiently as compared with a conventional method for determining a wireless parameter set from all the possible combinations.

First, a center carrier frequency (simply referred to as a "carrier frequency") to be used is determined from several carrier frequencies $f_A$, $f_B$, ..., defined in advance because this parameter influences most greatly on selection of the other wireless parameters (step S1). When determining the carrier frequency, interference from other transmitters, the required transmission rate, the moving speed of a mobile station, and other necessary factors are considered. For instance, when taking the interference conditions into account, the interference power levels of the carrier frequencies are estimated, and a carrier frequency without an interference signal is selected. If all the carrier frequencies contain interference signals, one with the least interference is selected. As to the required transmission rate, the higher the required transmission rate, the higher the carrier frequency is selected, while a lower carrier frequency is selected for a lower transmission rate. This is because as the carrier frequency becomes higher, a broader signal band can be easily allocated from the viewpoint of a specific band. As to the moving speed, when the assumed moving speed is high, a lower carrier frequency is selected to reduce influence of fading fluctuation.

After the carrier frequency to be used is determined, a signal bandwidth is determined (step S2). A signal bandwidth is selected from prescribed signal bandwidths considering the required transmission rate, the QoS, the interference conditions, etc. For example, a signal bandwidth is determined taking into account the required transmission rate communicated to the transmitter 1 from an upper layer. For the QoS, if real-time transmission is required for the data to be transmitted, a broader signal bandwidth is selected. Regarding the interference conditions, a signal bandwidth is selected such that as few interference signals exist as possible in the selected signal bandwidth.

After the center carrier frequency and the signal bandwidth have been determined, a multiplexing mode is determined (e.g., TDD/FDD mode selection) for bi-directional wireless communication, taking into account the interference conditions, the transmitter-to-receiver distance, etc. (step S3). From the viewpoint of the interference condition, if interference signal does not exist in the frequency band to be allocated to FDD, then FDD is selected. If the frequency band to be allocated to FDD is used by other transmitters, then TDD is selected. If TDD is employed, a non-transmission time interval called a guard time has to be inserted in bi-directional communications to avoid collision. Insertion of the guard time leads to degradation of transmission efficiency, and especially when the distance from the transmitter to the receiver is long, a long guard time needs to be inserted. Accordingly, considering the transmitter-to-receiver distance, TDD/FDD selection is performed trading off the possible reduction of transmission efficiency caused by TDD and degradation of characteristic caused by FDD.

After the center carrier frequency, the signal bandwidth, and the multiplexing mode have been determined, a transmission scheme, such as single carrier TDMA, or CDMA, OFDM, is determined taking into account the already determined parameters, as well as the interference condition (step S4). For example, if influence of interference from other transmitters is large, a CDMA transmission scheme superior in anti-interference characteristic is selected. If influence of multipath fading is large while with less interference, an OFDM transmission scheme superior in anti-multipath fading characteristic is selected. If the selected signal bandwidth is narrow, or if influence of multipath fading and/or interference is small, then a single carrier TDMA transmission scheme that allows demodulation with less arithmetic operations is selected.

After the center carrier frequency, the signal bandwidth, the multiplexing mode, and the transmission scheme have been determined, a multi-antenna transmission/receiving mode, such as BF, STC, E-SDM, or SDM, is selected taking into account the already determined parameters, the numbers of antennas of the transmitter and the receiver, the inter-antenna channel correlation, and the interference condition (step S5). For example, if correlation between transmission antennas and correlation between receiving antennas are high with insufficient receiving power level at the receiver, then a BF mode that can increase the receiver power level using a directive radiation pattern is selected. If the correlation between transmission antennas and the correlation between receiving antennas are low, a STC mode that can improve the signal quality by the diversity effect is selected. If it is necessary to increase the receiving power level and the transmission rate, then an E-SDM that allows parallel data transmission and can increase the receiving power level using an eigenbeam directive radiation pattern is selected. If the FDD mode has been selected, the propagation path condition, called channel state information, has to be fed back to the transmitter with the E-SDM scheme. Accordingly, if a sufficient signal bandwidth cannot be guaranteed for signal feedback, it is desired not to select the E-SDM mode. If it is desired to further increase the transmission rate although a sufficient receiving power level is achieved, then an SDM mode that allows parallel data transmission is selected.

After the center carrier frequency, signal bandwidth, the multiplexing mode, transmission scheme, and multi-antenna transmission/receiving mode have been determined, a modulation scheme and a channel coding rate are determined taking into account the already determined wireless parameters and the propagation path condition at the receiver (step S6). For example, a modulation scheme and a channel coding rate are selected according to the SINR of the received signal such that the data signals are to be demodulated at a desired signal quality at the receiver under the selected transmission scheme and the multi-antenna transmission/receiving mode. The desired signal quality of the received signal is, for example, the frame error rate (FER) at or below 0.1.

In this manner, the wireless parameters are selected in a hierarchical manner in preferential order, and a wireless parameter set can be determined more efficiently as compared with the conventional parameter determination from all the possible combinations.

<Fifth Embodiment>

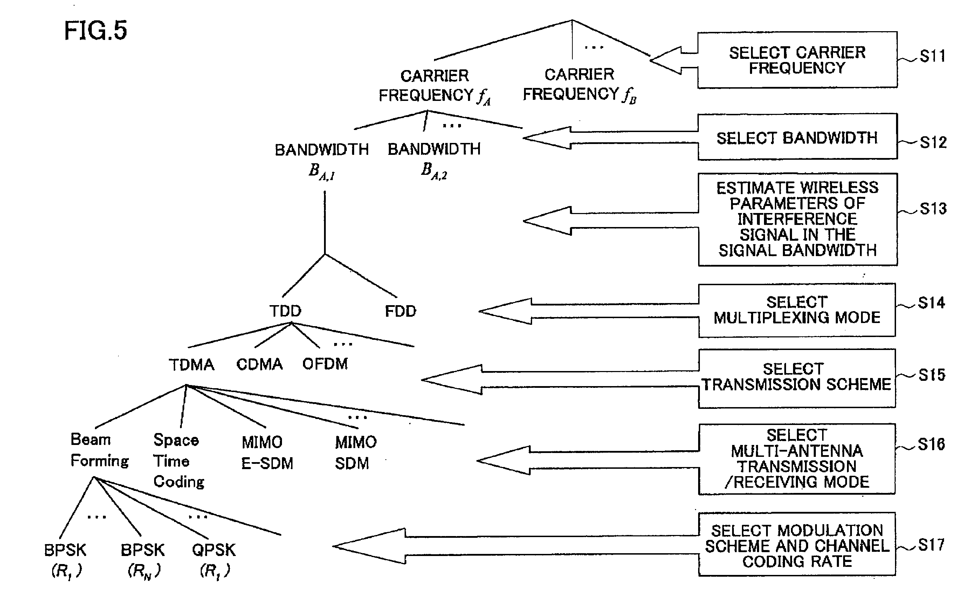

FIG. 5 is a schematic diagram illustrating an example of hierarchical wireless parameter determination performed at the transmitter according to the fifth embodiment of the invention. In this embodiment, estimation of wireless parameters of an interference signal in the selected signal bandwidth is inserted after the center carrier frequency and the signal bandwidth have been determined. To be more precise, after determinations of the center carrier frequency (S11) and signal bandwidth (S12), wireless parameters of an interference signal existing in the selected bandwidth are estimated (S13). Then, other wireless transmission parameters are selected one by one based on the estimated wireless parameters of the interference signal such that a satisfactory interference canceling characteristic is achieved at the receiver (S14-S17).

This arrangement can further improve the received signal quality as compared with not considering the wireless parameters of the interference signal. For example, if it is estimated that the interference signal existing in the same signal bandwidth uses a CDMA transmission scheme, then the transmitter 1 selects a CDMA transmission scheme and transmits signals in synchronization with the interference signal using a spreading code orthogonal to that of the interference signal. This arrangement allows the receiver to reduce the influence of the interference signal through despreading.

<Sixth Embodiment>

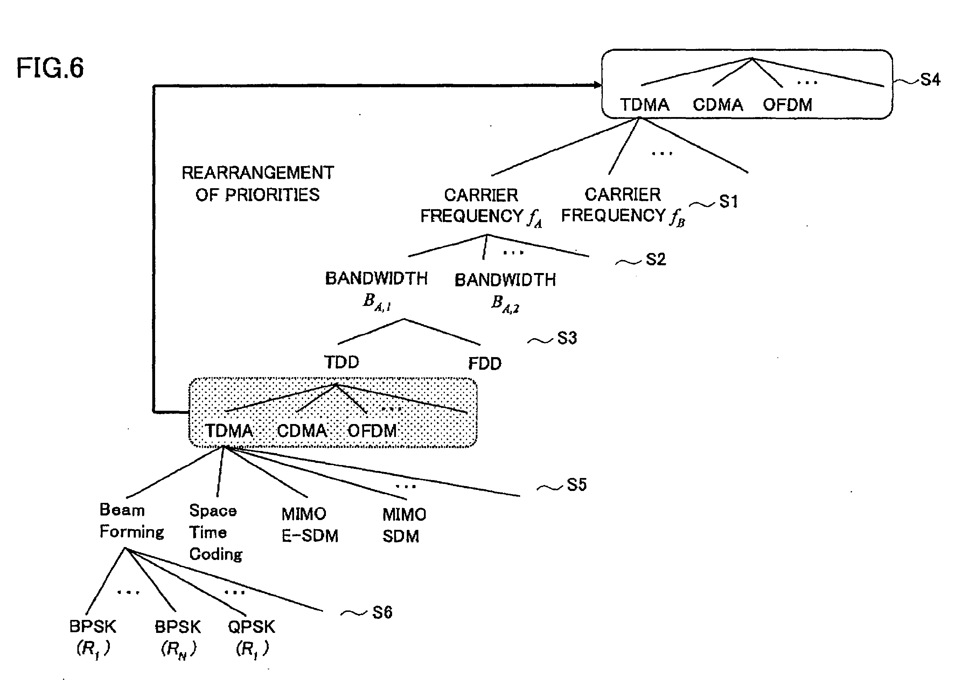

FIG. 6 is a schematic diagram illustrating an example of hierarchical wireless parameter determination performed by the transmitter according to the sixth embodiment of the invention. In this embodiment, preferential order defining the priorities of parameter selection is changed or rearranged prior to the hierarchical wireless parameters determination shown in FIG 4.

In the example shown in FIG. 6, priority is given to selection of a transmission scheme which is performed in step S4 in FIG. 4. For example, if interference signals exist in all the currently available frequency bands, it is desired to select a CDMA transmission scheme superior in anti-interference characteristic prior to determining a carrier frequency and/or a signal bandwidth. Then, other wireless parameters, such as carrier frequency, signal bandwidth, multiplexing mode, multi-antenna transmission/receiving mode, modulation scheme, or channel condign rate, are determined based on the selection of the CDMA transmission scheme.

By changing or rearranging the preferential order of wireless parameter determination according to the wireless conditions, a wireless parameter set that can guarantee satisfactory transmission quality can be determined efficiently, while reflecting the wireless environment. In addition, if a required transmission rate is too large as compared to the available bandwidth, a SDM multi-antenna transmission/receiving mode is selected first, then the other wireless parameters, e.g., carrier frequency, signal bandwidth, multiplexing mode, transmission scheme, modulation scheme, and channel condign rate, are determined successively. Concerning the propagation environment between the transmitter and the receiver, if delay spread in multipath fading is very large, an OFDM transmission scheme is selected first, and then carrier frequency, signal bandwidth, multiplexing mode, multi-antenna transmission/receiving mode, modulation scheme, and channel coding rate are determined. By appropriately adjusting preferential order for the selection of wireless parameters depending on the environment, a set of wireless parameters can be determined efficiently according to the environment and the required conditions.

<Seventh Embodiment>

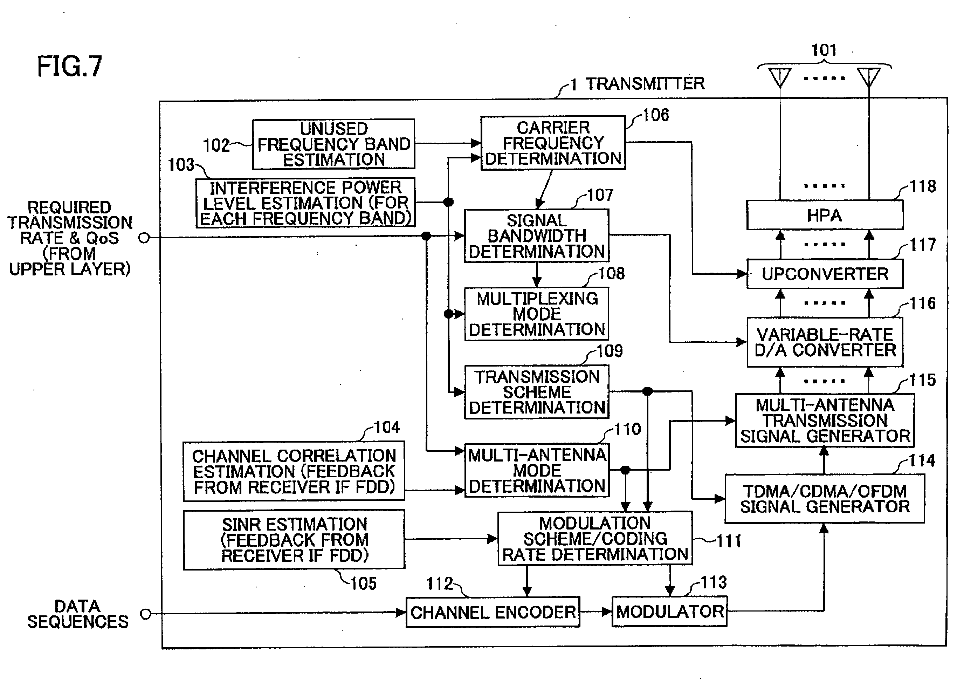

FIG. 7 is a block diagram of a transmitter 1, showing a structure suitable to the hierarchical determination of wireless parameters. The transmitter 1 includes an unused frequency band estimation unit 102, an interference power level estimation unit 103, a channel correlation estimation unit 104, an SINR estimation unit 105, a carrier frequency determination unit 106, a signal bandwidth determination unit 107, a multiplexing mode determination unit 108, a transmission scheme determination unit 109, a multi-antenna transmission/receiving mode determination unit 110, a modulation scheme/coding rate determination unit 111, a channel encoder 112, a modulator 113, a TDMA/CDMA/OFDM signal generator 114, a multi-antenna transmission signal generator 115, a variable-rate D/A converter 116, an upconverter 117, and an HPA (High Power Amplifier) 118. The transmitter 1 receives data sequences to be transmitted, as well as required transmission rate and QoS, from an upper layer.

Prior to signal transmission, the transmitter 1 estimates a frequency band unused by other transmitters at the unused frequency band estimation unit 102. The interference power level estimation unit 103 estimates the interference power level for each frequency band. Based on these estimation results, the carrier frequency determination unit 106 determines a center carrier frequency to be used by the transmitter 1. Then, based on the determined center carrier frequency and the information received from the upper layer, such as the required transmission rate and/or QoS, the signal bandwidth determination unit 107 determines the signal bandwidth for the signals to be transmitted. Then, based on the determined signal bandwidth and the interference power level, as well as on the assumed distance between the transmitter 1 and the receiver, the multiplexing determination unit 108 determines a multiplexing mode, performing TDD/FDD selection in this example. Then, the transmission scheme determination unit 109 selects a transmission scheme from single carrier TDMA, CDMA, OFDM, etc., based on the determined signal bandwidth and the interference power level in that signal bandwidth. The multi-antenna transmission/receiving mode determination unit 110 determines a multi-antenna transmission/receiving mode, such as BF, STC, E-SDM, or SDM, based on the required transmission rate and the inter-antenna channel correlations estimated by the channel correlation estimation unit 104. If FDD is selected as the multiplexing mode, then the channel correlation is estimated at the receiver, and the estimation result is fed back to the transmitter 1. Then, the modulation scheme/coding rate determination unit 111 determines a modulation scheme and a coding rate based on the selected transmission scheme, multi-antenna transmission/receiving mode, and the propagation path condition (such as SINR). If FDD is selected as the multiplexing mode, the SINR estimated at the receiver is fed back to the transmitter 1.

After these wireless parameters are determined, the channel encoder 112 performs error correction encoding on the data sequences to be transmitted using the selected channel coding rate. The modulator 113 modulates the coded data sequences using the selected modulation scheme. TDMA/CDMA/OFDM signal generator 114 generate a transmission signal based on the transmission scheme selected by the transmission scheme determination unit 109. The multi-antenna transmission signal generator 115 generates a transmission signal for each of the multiple transmission antennas based on the multi-antenna transmission mode selected by the multi-antenna transmission/receiving mode determination unit 110. These operations are carried out by digital baseband processing. Then, the variable-rate D/A converter 116 converts the baseband-processed digital data to analog data based on the signal bandwidth determined by the signal bandwidth determination unit 107. Upconverter 117 performs frequency conversion on the analog signal to convert to an RF signal based on the center carrier frequency determined by the carrier frequency determination unit 106. The RF signal is then amplified by HPA 118, and transmitted from the corresponding transmission antenna 101.

<Eight Embodiment>

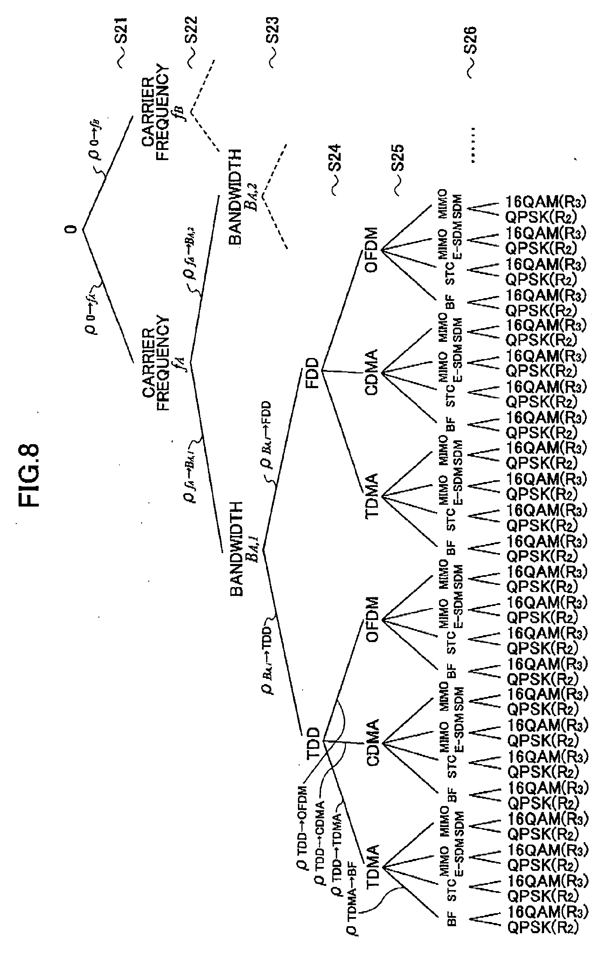

FIG. 8 is a schematic diagram illustrating an example of hierarchical wireless parameter selection performed by a receiver when estimating wireless parameters in the desired or interference signal. The estimation of the wireless parameters is performed based on likelihood in this embodiment.

The necessary wireless parameters are estimated successively beginning from the uppermost stage (or the root) of the tree illustrated in FIG. 8. First, a center carrier frequency used by a received signal is estimated from carrier frequencies $f_A$, $f_B$, ..., listed in advance (step S21). In this estimation, the likelihood of each of the listed carrier frequencies, which represents to what degree the carrier frequency is likely to be used for the received signal, is calculated. For instance, the likelihood $\rho_0 \rightarrow f_A$ of carrier frequency $f_A$, the likelihood $\rho_0 \rightarrow f_B$ of carrier frequency $f_B$, and the subsequent ones are calculated successively. After all the likelihood values are calculated, they are compared with each other to select the carrier frequency with the highest likelihood. The likelihood can be calculated using the power level of the received signal at each of the carrier frequencies. For example, if the power level of the received signal at carrier frequency $f_B$ is at almost the same level as the nose level, it is assumed that no signal is transmitted, and therefore, the likelihood $\rho_0 \rightarrow f_B$ is set to zero ($\rho_0 \rightarrow f_B$=0). If the reception power level is higher than the noise level of the received signal to a certain degree, then the likelihood is set to $\rho_0 \rightarrow f_A$=1. From the comparison, it is assumed that it is more likely that carrier frequency $f_A$ is used rather than $f_B$. Alternatively, the receipt power level itself may be used as the value representing the likelihood.

If the likelihood $\rho_0 \rightarrow f_A$ of carrier frequency $f_A$ is the highest, this carrier frequency is selected as the parameter, and the next parameter is estimated following the tree (or the hierarchy). In this example, a signal bandwidth is estimated on condition that carrier frequency $f_A$ is selected (step S22).

In estimation of the bandwidth of the received signal, a signal bandwidth is selected from bandwidths listed in advance. Similar to the estimation of the center carrier frequency, likelihood representing to what degree each of the signal bandwidths is likely to be used for the received signal is calculated. In the example shown in FIG. 8, likelihood $\rho_{fA} \rightarrow B_{A,1}$ of signal bandwidth $B_{A,1}$ likely to be used on the assumption that carrier frequency $f_A$ is calculated. Then, likelihood $\rho_{fA} \rightarrow B_{A,2}$ of signal bandwidth $B_{A,2}$ likely to be used on the assumption that carrier frequency $f_A$ is calculated. The calculated likelihood values are compared with each other, and the greater one is selected as the signal bandwidth currently used. The likelihood can be calculated using the receipt power level at each of the signal bandwidths. For example, if the received signal power level at a certain signal bandwidth is at almost the same level as the nose level, the likelihood of this' signal bandwidth is set to "0", and if not, the likelihood is set to "1". The calculated likelihood values are compared with each other to select the signal bandwidth with the highest likelihood. The received signal power level itself in the signal bandwidth to be estimated may also be used as the value indicating the likelihood.

In the above-described example, only a signal bandwidth is estimated on the assumption that carrier frequency $f_A$ is selected. However, it is also possible to estimate the center carrier frequency again, together with the signal bandwidth, based on the sum of the likelihood values using normalizing factors. For example, a normalizing factor "$c_f$" is applied to the likelihood of the center carrier frequency, and a normalizing factor "$c_B$" is applied to the likelihood of the signal bandwidth. In this case, as in the above-described example, $\rho_0 \rightarrow f_A$ and $\rho_0 \rightarrow f_B$ are estimated first for selection of a carrier frequency, and it is determined that carrier frequency $f_A$ is more likely to be used. Then, likelihood $\rho_{f,A} \rightarrow B_{A,1}$ and $\rho_{fA} \rightarrow B_{A,2}$ are calculated for estimation of signal bandwidth. Then, using normalizing factors, (a) $c_f{}^*\rho_0 \rightarrow f_A + c_B{}^*\rho_{fA} \rightarrow B_{A,1}$ representing the likelihood that signal bandwidths $B_{A,1}$ is used under carrier frequency of $f_A$, (b) $c_f{}^*\rho_0 \rightarrow f_A + c_B{}^*\rho_{fA} \rightarrow B_{A,2}$ representing the likelihood that signal bandwidths $B_{A,2}$ is used under carrier frequency of $f_A$, and (c) $c_f{}^*\rho_0 \rightarrow f_B$ representing the likelihood that carrier frequency $f_B$ is used, are compared with each other to select the most likely wireless parameter(s). This arrangement is advantageous because even if carrier frequency $f_A$ is selected incorrectly, correct carrier frequency $f_B$ is reselected as the wireless parameter candidate during the estimation of signal bandwidth. Consequently, parameter selection error can be reduced.

After the carrier frequency and the signal bandwidth are estimated, multiplexing mode (such as TDD or FDD, transmission scheme (such as TDMA, CDMA, or OFDM), multi-antenna transmission mode (such as BF, STC, MIMO E-SDM, or MIMO SDM), and modulation scheme/channel coding rate are estimated successively in the same manner (steps S23, S24, 25 and 26, respectively).

In calculation of likelihood of multiplexing mode (such as TDD or FDD), a difference between FDD and TDD can be used. For example, signals are transmitted continuously in FDD, while transmission ON and OFF are repeated at constant intervals in TDD. Making use of this difference, if signal receipt is repeatedly ON and OFF, then the likelihood of TDD is set to "1", while setting to "0" if not. By comparing the calculated likelihood, multiplexing mode can be estimated. Alternatively, the ratio of ON duration to OFF duration may be used as a value representing the likelihood.

For the likelihood of transmission scheme, such as TDMA, CDMA, or OFDM, a test statistic value used in identification of transmission scheme based on hypothesis testing making use of cyclostationarity can be used. The Cyclic autocorrelation function for evaluating presence or absence of cyclostationarity is expressed as

$$\hat{R}^{\alpha}_{xx^*}(\nu) = \frac{1}{T_o} \sum_{i=0}^{T_0-1} x[i]x[i+\nu]e^{-j2\pi\alpha i}. \qquad (1)$$

The function may also be defined by

$$\hat{R}^{\alpha}_{xx}(\nu) = \frac{1}{T_o} \sum_{i=0}^{T_0-1} x[i]x^*[i+\nu]e^{-j2\pi\alpha i} \qquad (2)$$

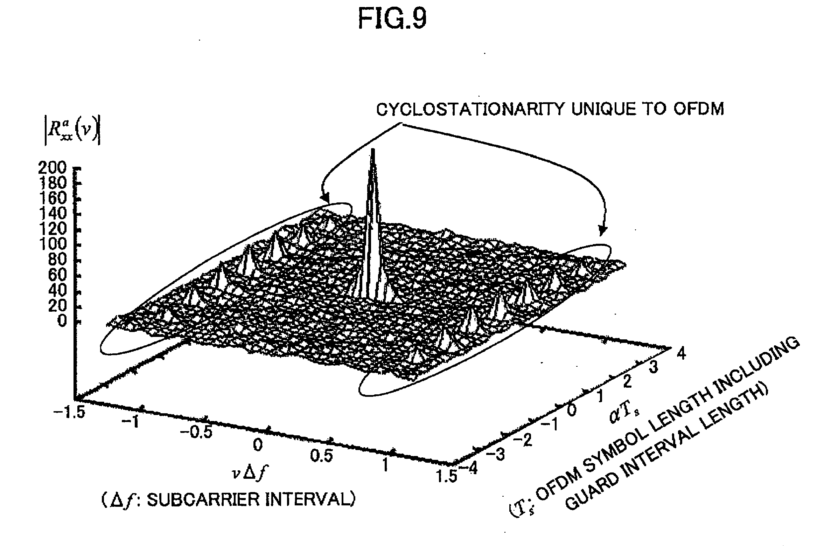

where x[i] denotes a received signal sampling value (a (complex number) at sampling time i, and $T_0$ denotes the number of observed samples. An example of cyclic autocorrelation function of OFDM signal expressed by Equation (2) is illustrated in FIG. 9.

In FIG. 9, a BPSK modulation scheme is used, the number of OFDM subcarriers is 16, the guard interval point number is 4, and an SNR is 20 dB. The perpendicular axis (the third dimension) represents absolute value of cyclic autocorrelation function, the first axis (the first dimension) represents $\nu\ \Delta f$ (where $\Delta f$ is s subcarrier interval), and the second axis (the second dimension) represents $\alpha Ts$ (where Ts denotes an OFDM symbol length including the guard interval length). Multiple peaks are observed at $\nu\ \Delta f = \pm 1$. These peaks are due to cyclostationarity unique to OFDM signals, and therefore, OFDM signals can be identified making use of the peak characteristic.

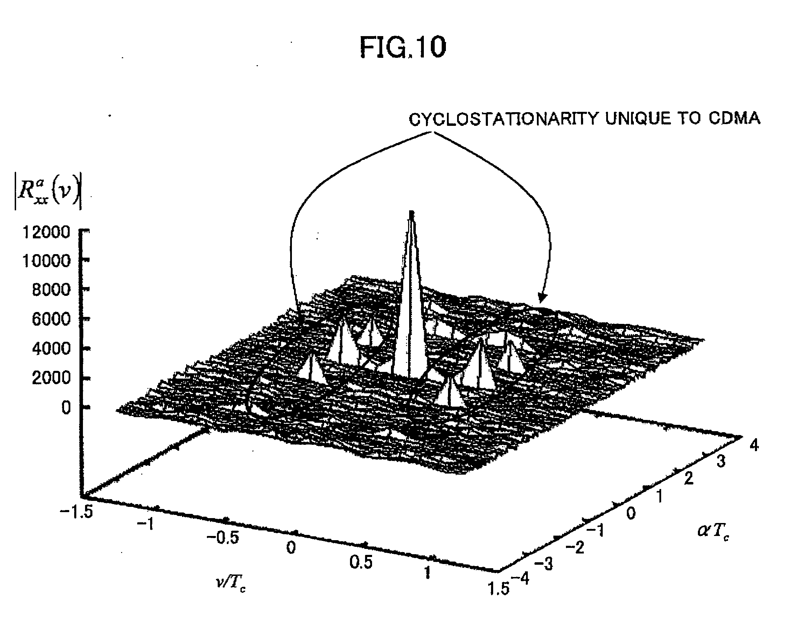

FIG. 10 is a graph showing a cyclic autocorrelation function of a CDMA signal. In this example, a BPSK modulation scheme is used, the CDMA spreading factor is 16, the number of code-multiplexing is 10, and SNR is 20 dB. The perpendicular axis (the third dimension) represents absolute value of cyclic autocorrelation function, the first axis (the first dimension) represents $\nu/Tc$ (where Tc denotes the chip length), and the second axis (the second dimension) represents $\alpha Ts$. Multiple peaks unique to CDMA are observed at $\nu/Tc = \pm 0.5$. Using these peaks, CDMA signals can be identified.

Details of identification of transmission schemes using cyclostationarity using hypothesis testing is disclosed in, for example,

(1) A. V. Dandawate and G. B. Giannakis, "Statistical Tests for Presence of Cyclostationarity", IEEE Trans. on Signal Processing, vol. 42, no. 9, pp. 2355-2369, Sep. 1994 (Publication 3); and
(2) M. Oner and F. Jondral, "Air Interface Recognition for a Software Radio System Exploiting Cyclostationarity", Proc. IEEE 15th International Symposium on Personal, Indoor and Mobile Radio Communications 2004 (Publication 4).

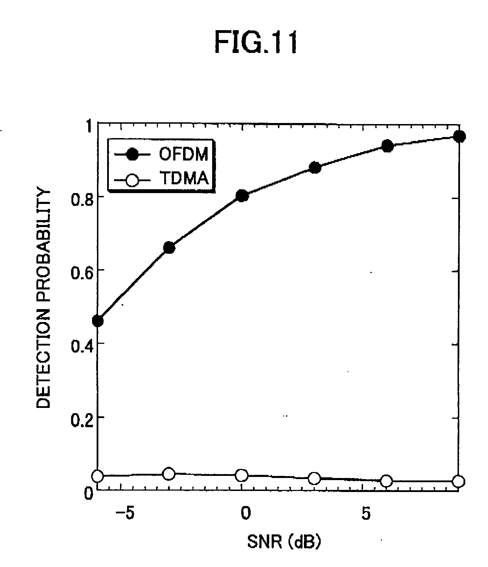

In these publications, a constant false alarm rate (CFAR) test is performed to determine whether there is a signal corresponding to the received signal, making use of the fact that the test statistic calculated by Equation (1) or (2) follows a chi-square distribution. An example of detection probability of an OFDM signal is illustrated in FIG. 11.
In FIG. 11, the detection probability of the OFDM signal based on cyclostationarity is plotted as a function of SNR. The dark circles indicate the probability that a received OFDM signal is determined correctly as an OFDM signal, and white circles indicate the probability that a received TDMA signal is incorrectly determined as an OFDM signal. When the received signal is an OFDM signal, the detection probability is improved as the SNR increases. At SNR of 9 dB, the received signal is correctly detected as an OFDM signal at high probability of 95% or more. On the other hand, if a received signal is a TDMA signal, the probability that the received signal is incorrectly determined as an OFDM signal is constantly less than 5% regardless of SNR. With this test, when the test statistic calculated using cyclostationarity is greater than the value defined from the chi-square table, then it is determined that the signal exists. Accordingly, a value obtained by subtracting the chi-squire distribution value from the test statistic may be used as the likelihood used for estimation of transmission scheme.
For likelihood used in estimation of multi-antenna transmission modes (such as BF, STC, MIMO E-SDM, or MIMO SDM), an error vector magnitude (EVM) can be employed. If a BF or STC multi-antenna mode is employed while a BPSK modulation scheme is applied, the constellation of the received signal becomes either of two points on the complex baseband plane as long as fading influence in the propagation path is small. On the other hand, when MIMO E-SDM or MIMO SDM are applied, multiple transmission signals are combined, and therefore, the constellation of the received signal on the complex baseband plane does not fall in either of the two points. Accordingly, EVM defined by the variance of the position on the complex baseband plane can be used as the likelihood to estimate the multi-antenna transmission mode. Since, in this example, estimation of modulation scheme has not been carried out yet when the multi-antenna transmission mode is estimated, EVM values are calculated for all the possible modulation schemes, and the average or the minimum can be used as the likelihood.
For likelihood used in estimation of modulation scheme, the test statistic can be used as in the estimation of transmission scheme, which is determined based on hypothesis testing making use of cyclostationarity.

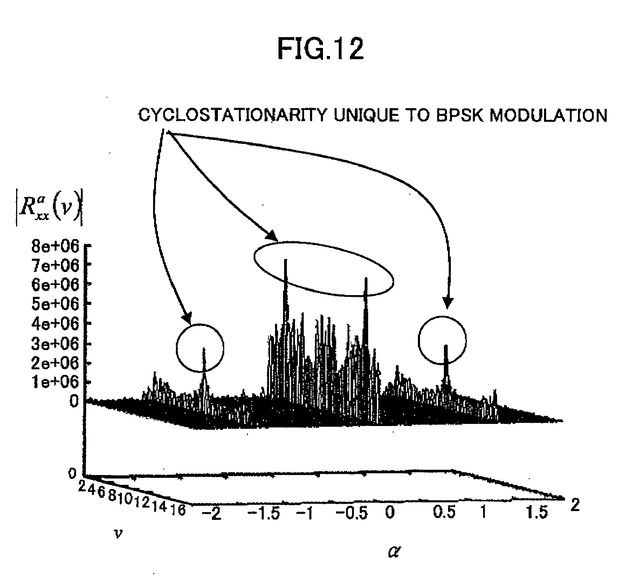

FIG. 12 is a graph showing a cyclic autocorrelation function using BPSK modulation, where SNR is set to 30 dB. Peaks exhibiting the cyclostationarity unique to BPSK appear at $\alpha=0$ and $\alpha=\pm1$.

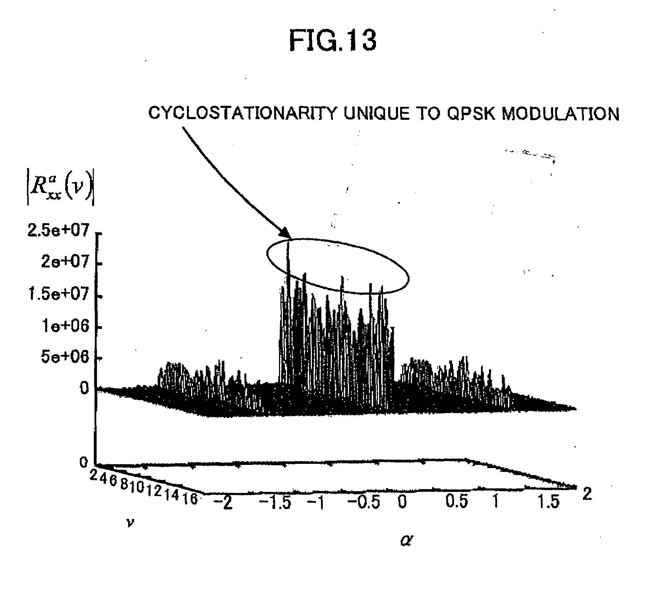

FIG. 13 is a graph showing a cyclic autocorrelation function using QPSK modulation, where SNR is set to 30 dB. Unlike the BPSK modulation shown in FIG. 12, peaks are not observed at $\alpha=\pm1$ in QPSK modulation of FIG. 13. Making use of this difference, BPSK modulation and QPSK modulation can be identified. Similar to the identification of the transmission scheme, a value obtained by subtracting the chi-square distribution value from the test statistic may be used as the likelihood used to estimate the modulation scheme.
Wireless parameter estimation accuracy can be further improved by applying a weighting factor determined by a combination of the wireless parameters to the likelihood. For example, when estimating transmission scheme and multi-antenna transmission mode after TDD is selected in the tree shown in FIG. 8, a weighting factor is applied so as to increase the likelihood of MIMO E-SDM since MIMO E-SDM has a high affinity with TDD when calculating likelihood of the multi-antenna transmission mode. This is because in MIMO E-SDM a transmitter requires the channel state information about the propagation path, and when TDD is employed, it is unnecessary to feed the channel state information back to the transmitter from the receiver, unlike FDD. In view of this efficiency of MIMO E-SDM in combination with TDD, the transmitter is more likely to use MIMO E-SDM when TDD is employed. In this manner, by weighting the likelihood based on the affinity between wireless parameters, a receiver can estimate a set of wireless parameters more accurately reflecting a more likely selection of wireless parameters at the transmitter. As another example, narrow signal bandwidth has affinity with TDMA because the influence of multipath fading is small, while broad signal bandwidth has affinity with OFDM because the influence of multi-path fading becomes large.
Based on the hierarchical tree shown in FIG. 8, wireless parameters most likely to be used are selected successively using likelihood, and a set of wireless parameters can be estimated in an efficient manner.
Although the present invention has been described using specific examples, the invention is not limited to these examples. There are many substitutions and modifications apparent to those skilled in the art without departing from the scope of the invention.

## Claims

1. A receiver for mobile communication comprising:

   a wireless scheme parameter storing unit configured to store a plurality of characteristics of multiple wireless schemes;
   a wireless scheme estimation unit configured to estimate one of the characteristics of a currently used wireless scheme from a received signal and select one of the wireless schemes corresponding to the estimated characteristic from the wireless scheme parameter storing unit; and
   a demodulator configured to demodulate the received signal based on the selected wireless scheme.

2. The receiver of claim 1, further comprising:

   an error detector configured to detect an error contained in the demodulation result,

   wherein if the error is detected in the demodulation result, the wireless scheme estimation unit selects another wireless scheme from the wireless scheme parameter storing unit, and the demodulator performs demodulation on the received signal based on the newly selected wireless scheme.

3. The receiver of claim 1, further comprising:

   an interference signal wireless scheme estimation unit configured to estimates a wireless scheme of an interference signal from the wireless schemes stored in the wireless scheme parameter storing unit; and
   an interference canceller configured to remove an interference signal component from the received signal based on the estimated wireless scheme of the interference signal.

4. The receiver of claim 1, wherein the wireless scheme estimation unit estimates a center carrier frequency, a signal bandwidth, a multiplexing mode, _a transmission scheme, a multi-antenna transmission mode, a modulation scheme, and a channel coding rate in a hierarchical manner.

5. A transmitter with one or more antennas used for mobile communication and capable of changing wireless parameters in an adaptive manner according to a propagation environment and required conditions such as quality of service, the transmitter comprising:

   a carrier frequency selecting unit configured to select a center carrier frequency from one or more unused or less-interfered with frequency bands;
   a signal bandwidth selecting unit configured to select a signal bandwidth according to at least one of a required transmission rate, QoS, interference condition, and other factors;
   a multiplexing mode selecting unit configured to select a multiplexing mode according to the selected signal bandwidth, the interference condition, and other factors;
   a multi-antenna transmission mode selecting unit configured to select a multi-antenna transmission mode according to at least one of the number of the antennas of the transmitter, the number of antennas of a receiver, channel correlation, SINR, and other factors; and
   a modulation scheme/channel coding rate selecting unit configured to select a modulation scheme and a channel coding rate according to the SINR.

6. A signal receiving method in mobile communication, comprising the steps of:

   calculating likelihood of multiple parameters for each of multiple wireless schemes stored in advance; and
   selecting a most likely parameter that is most likely to be used from the multiple parameters for each of the wireless schemes in a hierarchical manner.

7. A signal transmission method in mobile communication, comprising the step of:

   selecting a plurality of wireless parameters required to transmit a signal in a hierarchical manner, the wireless parameters including a transmission carrier frequency, a signal bandwidth, a multiplexing mode, a transmission scheme', a multi-antenna transmission mode, a modulation scheme and a channel coding.

**8.** The signal transmission method of claim 7, wherein a preferential order for selecting the wireless parameters in the hierarchical manner is adjusted according to a propagation environment and interference condition.

**9.** The signal transmission method of claim 7, wherein a preferential order for selecting the wireless parameters in the hierarchical manner is adjusted according to a wireless scheme of an interference signal.

RECEIVER
2
OUTPUT
DEMODULATOR
24
22
WIRELESS SCHEME ESTIMATION UNIT
23
WIRELESS SCHEME A
WIRELESS SCHEME B
WIRELESS SCHEME C
...
WIRELESS SCHEME PARAMETER STORING UNIT
21
TRANSMITTER
101
WIRELESS SCHEME A or B or ...
1

FIG.1

RECEIVER
2
OUTPUT
25
CRC UNIT
24
DEMODULATOR
ESTIMATE WIRELESS SCHEME AGAIN WHEN ERROR IS DETECTED BY CRC
22
WIRELESS SCHEME ESTIMATION UNIT
21
23
WIRELESS SCHEME A
WIRELESS SCHEME B
WIRELESS SCHEME C
...
WIRELESS SCHEME PARAMETER STORING UNIT
TRANSMITTER
101
WIRELESS SCHEME A or B or ...
1

FIG.2

FIG.3
1a
TARGET TRANSMITTER
WIRELESS SCHEME A or B or ...
1b
INTERFERING TRANSMITTER
WIRELESS SCHEME A or B or ...
21
RECEIVER
2
26
INTERFERENCE CANCELLER
24a
DESIRED SIGNAL DEMODULATOR
OUTPUT
WIRELESS SCHEME ESTIMATION UNIT (FOR TARGET TRANSMITTER)
22a
WIRELESS SCHEME ESTIMATION UNIT (FOR INTERFERING TRANSMITTER)
22b
WIRELESS SCHEME A
WIRELESS SCHEME B
WIRELESS SCHEME C
⋮
23
WIRELESS SCHEME PARAMETER STORING UNIT

FIG.4
CARRIER FREQUENCY $f_A$
CARRIER FREQUENCY $f_B$
...
BANDWIDTH $B_{A,1}$
BANDWIDTH $B_{A,2}$
...
TDD
FDD
TDMA
CDMA
OFDM
...
Beam Forming
Space Time Coding
MIMO E-SDM
MIMO SDM
...
BPSK $(R_1)$
...
BPSK $(R_N)$
QPSK $(R_1)$
...
Select carrier frequency from unused frequencies or less interfered frequencies
S1
Select bandwidth according to required transmission rate, QoS, interference condition, etc.
S2
Select multiplexing mode according to available signal bandwidth, interference condition, etc.
S3
Select transmission scheme according to selected signal bandwidth, interference condition, etc.
S4
Select multi-antenna transmission/receiving mode according to # of antennas, channel correlation, SINR, etc.
S5
Select modulation scheme and channel coding rate based on SINR
S6

FIG.5
SELECT CARRIER FREQUENCY
S11
SELECT BANDWIDTH
S12
ESTIMATE WIRELESS PARAMETERS OF INTERFERENCE SIGNAL IN THE SIGNAL BANDWIDTH
S13
SELECT MULTIPLEXING MODE
S14
SELECT TRANSMISSION SCHEME
S15
SELECT MULTI-ANTENNA TRANSMISSION /RECEIVING MODE
S16
SELECT MODULATION SCHEME AND CHANNEL CODING RATE
S17
CARRIER FREQUENCY $f_A$
CARRIER FREQUENCY $f_B$
BANDWIDTH $B_{A,1}$
BANDWIDTH $B_{A,2}$
TDD
FDD
TDMA
CDMA
OFDM
Beam Forming
Space Time Coding
MIMO E-SDM
MIMO SDM
BPSK ($R_1$)
BPSK ($R_N$)
QPSK ($R_1$)

FIG.6
TDMA
CDMA
OFDM
S4
REARRANGEMENT OF PRIORITIES
CARRIER FREQUENCY $f_A$
CARRIER FREQUENCY $f_B$
S1
BANDWIDTH $B_{A,1}$
BANDWIDTH $B_{A,2}$
S2
TDD
FDD
S3
TDMA
CDMA
OFDM
Beam Forming
Space Time Coding
MIMO E-SDM
MIMO SDM
S5
BPSK ($R_1$)
BPSK ($R_N$)
QPSK ($R_1$)
S6

FIG.7

1 TRANSMITTER
101
UNUSED FREQUENCY BAND ESTIMATION
102
INTERFERENCE POWER LEVEL ESTIMATION (FOR EACH FREQUENCY BAND)
103
REQUIRED TRANSMISSION RATE & QoS (FROM UPPER LAYER)
CARRIER FREQUENCY DETERMINATION
106
SIGNAL BANDWIDTH DETERMINATION
107
MULTIPLEXING MODE DETERMINATION
108
TRANSMISSION SCHEME DETERMINATION
109
MULTI-ANTENNA MODE DETERMINATION
110
CHANNEL CORRELATION ESTIMATION (FEEDBACK FROM RECEIVER IF FDD)
104
SINR ESTIMATION (FEEDBACK FROM RECEIVER IF FDD)
105
MODULATION SCHEME/CODING RATE DETERMINATION
111
DATA SEQUENCES
CHANNEL ENCODER
112
MODULATOR
113
TDMA/CDMA/OFDM SIGNAL GENERATOR
114
MULTI-ANTENNA TRANSMISSION SIGNAL GENERATOR
115
VARIABLE-RATE D/A CONVERTER
116
UPCONVERTER
117
HPA
118

FIG.8
0
$\rho_{0 \to f_A}$
$\rho_{0 \to f_B}$
S21
CARRIER FREQUENCY $f_A$
CARRIER FREQUENCY $f_B$
S22
$\rho_{f_A \to B_{A,1}}$
$\rho_{f_A \to B_{A,2}}$
BANDWIDTH $B_{A,1}$
BANDWIDTH $B_{A,2}$
S23
$\rho_{B_{A,1} \to TDD}$
$\rho_{B_{A,1} \to FDD}$
TDD
FDD
S24
$\rho_{TDD \to OFDM}$
$\rho_{TDD \to CDMA}$
$\rho_{TDD \to TDMA}$
$\rho_{TDMA \to BF}$
TDMA
CDMA
OFDM
S25
BF
STC
MIMO E-SDM
MIMO SDM
S26
16QAM(R3)
QPSK(R2)
......

FIG.9
CYCLOSTATIONARITY UNIQUE TO OFDM
$|R_{xx}^{a}(v)|$
200
180
160
140
120
100
80
60
40
20
0
−1.5
−1
−0.5
0
0.5
1
1.5
$v\Delta f$
($\Delta f$: SUBCARRIER INTERVAL)
−4
−3
−2
−1
0
1
2
3
4
$\alpha T_s$
($T_s$: OFDM SYMBOL LENGTH INCLUDING GUARD INTERVAL LENGTH)

FIG.10
CYCLOSTATIONARITY UNIQUE TO CDMA
$|R_{xx}^{a}(v)|$
12000
10000
8000
6000
4000
2000
0
−1.5
−1
−0.5
0
0.5
1
1.5
$v/T_c$
−4
−3
−2
−1
0
1
2
3
4
$\alpha T_c$

FIG.11

OFDM
TDMA
DETECTION PROBABILITY
1
0.8
0.6
0.4
0.2
0
−5
0
5
SNR (dB)

# FIG.12

CYCLOSTATIONARITY UNIQUE TO BPSK MODULATION
$|R_{xx}^{a}(v)|$
8e+06
7e+06
6e+06
5e+06
4e+06
3e+06
2e+06
1e+06
0
0 2 4 6 8 10 12 14 16
$v$
-2 -1.5 -1 -0.5 0 0.5 1 1.5 2
$\alpha$

CYCLOSTATIONARITY UNIQUE TO QPSK MODULATION
$|R_{xx}^{a}(v)|$
2.5e+07
2e+07
1.5e+07
1e+06
5e+06
0
0
2 4 6 8 10 12 14 16
v
-2
-1.5
-1
-0.5
0
0.5
1
1.5
2
α

FIG.13

European Patent Office

# EUROPEAN SEARCH REPORT

Application Number
EP 05 25 6771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 416 661 A (MATSUSHITA ELECTRIC INDUSTRIAL CO., LTD) 6 May 2004 (2004-05-06) * paragraphs [0001] - [0007] * * paragraphs [0028] - [0040] * * paragraphs [0074] - [0083] * ----- | 1-9 | H04L1/00 H04L27/00 |
| X | EP 1 345 348 A (NTT DOCOMO, INC) 17 September 2003 (2003-09-17) * paragraphs [0004], [0005] * * paragraphs [0027] - [0030] * * paragraph [0046] * ----- | 5,7-9 | |
| A | US 6 131 013 A (BERGSTROM ET AL) 10 October 2000 (2000-10-10) * abstract * ----- | 3 | |
| | | | TECHNICAL FIELDS SEARCHED (IPC) |
| | | | H04L |

The present search report has been drawn up for all claims

| Place of search | Date of completion of the search | Examiner |
|---|---|---|
| The Hague | 6 March 2006 | Orozco Roura, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

2

## ANNEX TO THE EUROPEAN SEARCH REPORT ON EUROPEAN PATENT APPLICATION NO. EP 05 25 6771

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2006

| Patent document cited in search report | | Publication date | Patent family member(s) | | | Publication date |
|---|---|---|---|---|---|---|
| EP 1416661 | A | 06-05-2004 | CN | 1499800 | A | 26-05-2004 |
| | | | JP | 2004153466 | A | 27-05-2004 |
| | | | US | 2004081260 | A1 | 29-04-2004 |
| EP 1345348 | A | 17-09-2003 | CA | 2419906 | A1 | 28-08-2003 |
| | | | CN | 1441605 | A | 10-09-2003 |
| | | | JP | 2003259447 | A | 12-09-2003 |
| | | | SG | 113451 | A1 | 29-08-2005 |
| | | | US | 2003161323 | A1 | 28-08-2003 |
| US 6131013 | A | 10-10-2000 | CA | 2317611 | A1 | 05-08-1999 |
| | | | DE | 19982801 | T0 | 29-03-2001 |
| | | | FI | 20001673 | A | 14-07-2000 |
| | | | GB | 2350040 | A | 15-11-2000 |
| | | | JP | 2002502175 | T | 22-01-2002 |
| | | | SE | 0002225 | A | 29-09-2000 |
| | | | WO | 9939444 | A1 | 05-08-1999 |

EPO FORM P0459

For more details about this annex : see Official Journal of the European Patent Office, No. 12/82